Europäisches Patentamt

European Patent Office

Office européen des brevets

(19)

(11) Publication number: **0 027 379**
**B1**

# EUROPEAN PATENT SPECIFICATION

(12)

(45) Date of publication of patent specification: **26.06.85**

(51) Int. Cl.⁴: **B 29 C 65/48**

(21) Application number: **80303606.0**

(22) Date of filing: **13.10.80**

(54) **Apparatus for and method of applying a base cup to a round bottomed container.**

(30) Priority: **15.10.79 US 84594**

(43) Date of publication of application:
**22.04.81 Bulletin 81/16**

(45) Publication of the grant of the patent:
**26.06.85 Bulletin 85/26**

(84) Designated Contracting States:
**DE FR GB IT**

(56) References cited:
**EP-A-0 002 245**
**BE-A- 635 555**
**BE-A- 776 333**
**CH-A- 542 746**
**FR-A-1 280 624**
**FR-A-2 234 615**
**FR-A-2 389 474**
**GB-A-1 042 278**
**GB-A-1 132 312**
**US-A-3 604 940**
**US-A-3 630 797**
**US-A-3 960 624**
**US-A-4 055 455**
**US-A-4 096 620**
**US-A-4 107 523**

(73) Proprietor: **B. & H. MANUFACTURING
COMPANY, INC.**
**3461 Roeding Road**
**Ceres California 95307 (US)**

(72) Inventor: **Hoffman, Wolfgang**
**302 Hawkeye Street Apt.358**
**Turlock California 95380 (US)**

(74) Representative: **Williams, Trevor John et al
J.A. KEMP & CO. 14 South Square Gray's Inn
London WC1R 5EU (GB)**

## Description

This invention relates to apparatus for and a method of applying base cups to round bottomed, e.g. plastics, containers.

Plastics containers for beverages made of polyethylene terephthalate (commonly referred to as PET) are becoming increasingly popular because of their light weight, their strength and capacity to hold beverages including carbonated beverages, their lack of toxicity and the economical materials and methods for their manufacture. Typically, these containers are made by what is called "blow moulding", in which air under pressure is used to form the container.

As currently manufactured, blow-moulded PET containers have round bottoms such that they will not stand upright. Accordingly, what are known as "base cups" are applied to these containers, such base cups having flattened bottoms which serve to stabilize the container when it is upright. Problems exist in the application of base cups to blow-moulded containers at a rapid rate, accurately and with the base cups applied securely to the containers. It is also important for aesthetic reasons, if for no other reason, that the containers be upright in their base cups.

It is an object of the present invention to provide an improved apparatus and an improved method for applying base cups to blow-moulded round bottomed containers.

It is a further object of the invention to provide an apparatus and a method whereby base cups can be applied to such containers rapidly, accurately and securely and which can optionally also be used to carry out other operations such as pressure testing, leak testing and testing for proper placement of the containers in their base cups.

EP—A—0002245 discloses apparatus for applying cups to the bottoms of round bottomed containers having the pre-characterizing features of claim 1 and comprising a transport device for intermittently moving a cup holder along the path, a cup feed device for depositing a cup into a cup holder and means for depositing a round bottomed container into a cup supported in said cup holder and pressing the container against the cup for adhesive securement thereof using adhesive applied to an inner surface of the cup, and means for discharging the cup and container assembly from the transport device. In this prior construction the adhesive is applied to the cups before they are fed to the transport device with the containers, previously supplied to the transport device, then being pressed home into the cups for adhesion thereto. With this arrangement, because of the time delay from the time of application to the cups of the adhesive and the pressing home of the containers thereinto, the commonly used hot melt adhesive needs to be used in excess to retain sufficient heat for it still to be usable as adhesive when the container is pressed against it. Also with this prior art construction the transport device needs to be provided at each possible location for containers thereon with means for pressing the container against the cup with, as a consequence, separate and individual pressing means being required at each container receiving location on the transport device. The present invention is directed at providing an improved apparatus which overcomes prior art disadvantages as well as readily facilitating the provision of other preferred advantageous features.

The apparatus of the present invention is characterised in that the cup feed device is provided at a station upstream of the station at which there are located the means for depositing the container into the cup, adhesive applying means are provided at a station intermediate the stations at which the cup feed device and the container supply means are located and in that the means for applying pressure to the container are located at the same station as the container supplying means; the cup feed device, the container supplying means, adhesive applying means and the pressure applying means being located at respective stations for operation during dwell periods in the intermittent indexing operation of said transport device. With this arrangement the cups can be deposited in the transport device and adhesive applied thereto, from a stationary applicator, at the station immediately before the station at which the containers are applied. There is then a minimum time for heat to be lost from the applied adhesive such that the minimum carefully controlled amount of adhesive can be used to secure the bottoms of the containers into the cups. Additionally there is no requirement for expensive and complicated container support and pressure applying means to be provided at each location on the transport means at which cups are received since the containers can be deposited from stationary feeding means straight into a stationary cup at a station immediately downstream of the adhesive applying means with a single pressure applying means only being required at that single container applying station. Upon subsequent movement of the transport device the container is then carried securely by the cup into which it has been adhesively secured to the means for removing each assembly of container and cup from the transport device. With there being no cumbersome container holding and pressing means at each working position around the transport device the various stations to which the transport device carries the assembly can readily be used for checking and testing purposes in a very simple and efficient manner.

In the preferred construction the cup is caused to spin while the adhesive is being applied thereto to cause a continuous curved line of adhesive to be applied to the bottom of the cup to provide the best possible securement with the minimum usage of adhesive. With the arrangement of the present invention this can be achieved very simply since the cup can be arranged to be rotated while held in the cup holder at the work station before application of the container whereas such rotation would not be possible with the arrangement of the reference where the adhesive is applied to the cup before it is supplied to the cup holder in the transport device. With the structure indicated above, the pressure applying means at the point of application to the container, because it is stationary, can very easily be arranged to apply air pressure to the interior of the container. This is the preferred manner of applying pressure to the container since it has the double action of forcing the container into the cup to be adhesively secured thereto and to smoothing out any any wrinkles or deformities in the container itself such that it is properly and evenly shaped following the earlier blowing process by which it would normally have been made.

According to another aspect of the invention there is provided a method to applying round bottomed containers to cups with the round bottoms of the containers seated in the cups, wherein the containers are pressed into cups to the interior of which adhesive has been deposited while the cups are held by cup holders in a transport device for advancing the cups, characterised in that the cups are first deposited in sequence in cup holders prior to having adhesive deposited therein, and in that the containers are fed to the cups and pressed thereinto while each individual cup is temporarily stationary prior to the removal of cup and container assemblies from the respective cup holders.

A particular preferred feature of the invention to provide an even, reliable supply of adhesive to the interior of the cups is that the adhesive applying station comprises an adhesive applicator mounted for movement into and out of the interior of a cup in a cup holder and a drive means for spinning the cup while the adhesive applicator is within the cup to cause application of a curved glue line to the bottom of the cup.

Although the invention will be described with particular reference to the application of plastics base cups to plastics containers, especially PET containers, it will be appreciated that the invention has other applications within the scope of the claims.

One embodiment of the invention is shown, by way of example, in the accompanying drawings, in which:

Figure 1 is a diagrammatic plan view of a machine for applying base cups to the bottoms of round-bottomed containers and showing the various stations at which several operations are performed;

Figure 2 is a top plan view of the right hand portion of the machine as viewed in Figure 1 and showing a cup insertion and cup-detector station. A, an idle station B, a high pressure testing station E, a leak testing station F, an alignment station G and a container removal station H;

Figure 3 is a continuation of Figure 2 on the left hand side of the machine as viewed in Figure 1 and shows an adhesive injection station C and a container insert and pressurizing station D;

Figure 4 is a view in side elevation and partly in vertical section taken along the line 4—4 of Figure 2;

Figure 5 is a section taken along the line 5—5 of Figure 2, showing the cup insertion station A;

Figure 6 is a section along the line 6—6 of Figure 3, showing the adhesive applicator station C.

Figure 7 is a section taken along the line 7—7 of Figure 3 showing the container feed station D where containers are supplied to the base cups.

Figure 8 is a section along the line 8—8 of Figure 2, showing the container-base cup assembly removal station;

Figure 9 is similar to Figure 7 but shows an assembled container and base cup with a nozzle in place for application of air under pressure;

Figure 10 is a vertical section taken through the base cup feed station A, showing a base cup being placed in a socket.

Figure 11 is a top view of a cup showing its interior and the circular pattern of glue as applied thereto at station C;

Figure 12 is a vertical section through a socket and cup at station C with the adhesive applicator in operating position;

Figure 13 is a section taken through a cup and socket showing the manner in which a base cup is adhered thereto.

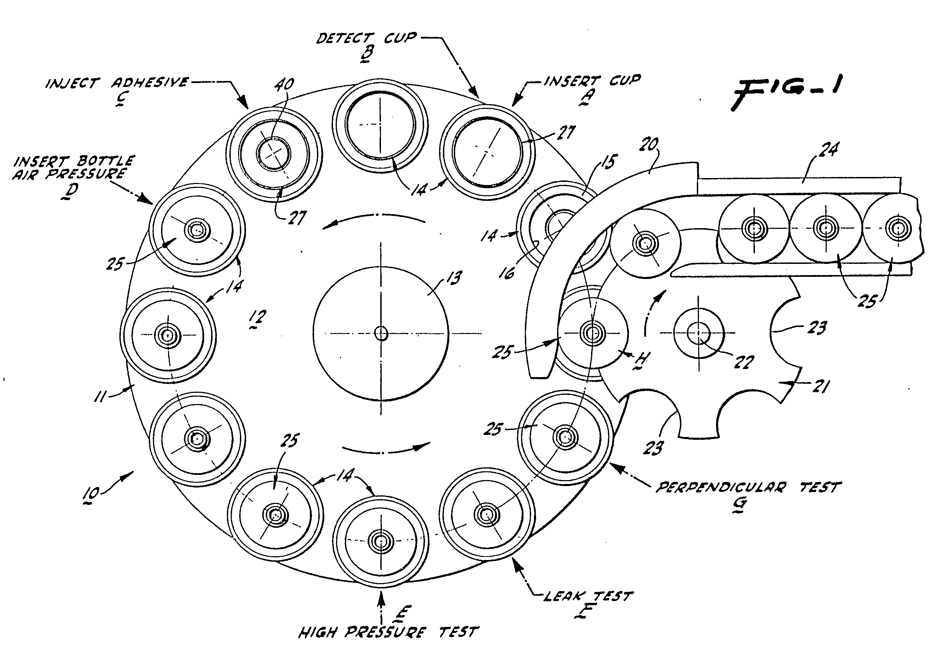

Referring now to the drawings and first to Figure 1, there is shown a machine 10 that comprises a turret 11 having a plate 12 fixed to a shaft 13. Mounted on the plate are a plurality, twelve in number as shown in Figure 1, of base cup sockets 14, each with a stepped interior configuration 15 and a central opening 16. The configuration of the interior of the sockets 14 can best be seen in section in Figures 10 and 12. The bottom portion of a container-cup assembly 25 is shown in Figure 13. Also shown in Figure 1 is a curved container guide 20 which guides the container-base cup assemblies out of the machine with the assistance of a star wheel 21 fixed to a shaft 22 and having pockets 23. A guide 24 is provided to guide the container-base cup assemblies away from the machine. The turret 11 is operated intermittently. The several stations are station A at which a base cup is inserted in a socket 14, station B at which the presence or absence of a cup is detected, station C at which adhesive is applied to a cup, and station D at which a container is inserted and air under pressure is applied to the interior of the bottle after it is seated in a cup for the purpose of properly shaping the container and for achieving a tight, secure bond at the glue line. The next three stations are idle stations which allow the adhesive to cool and harden. The next station is a pressure testing station E, the purpose of which is to apply air pressure sufficient to test the strength of the container and it is followed by a leak testing station F at which air under pressure is admitted and the presence or absence of a leak is detected. At station G the alignment of the container and base cup is sensed to determine whether the alignment is proper. At station H the container-base cup assembly 25 is removed by the star wheel 21 and the guide 20.

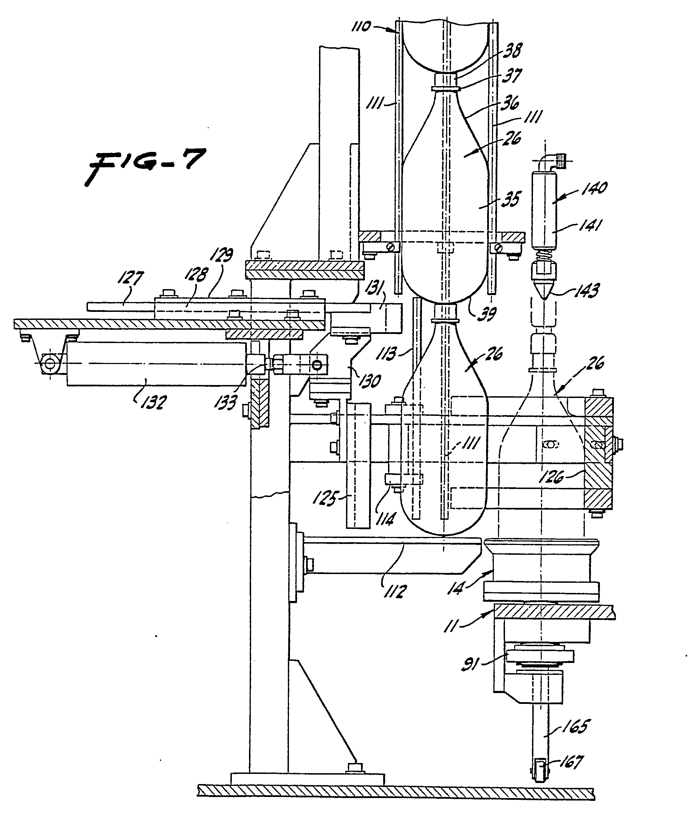

Referring to Figure 13 for a view of a container 26 and the base cup 27, which together form the assembly 25, the cup 27 has a concave bottom portion 28 formed with an annular rim 29 projecting downwardly. The container 26 (see Figure 7) has a body portion 35, a tapered neck portion 36, a flange 37, a tip 38, and a rounded, i.e. semispherical, bottom 39. As will be seen in Figure 13, the rounded bottom 39 is adhered by a glue line 40 to the interior of the base cup 27.

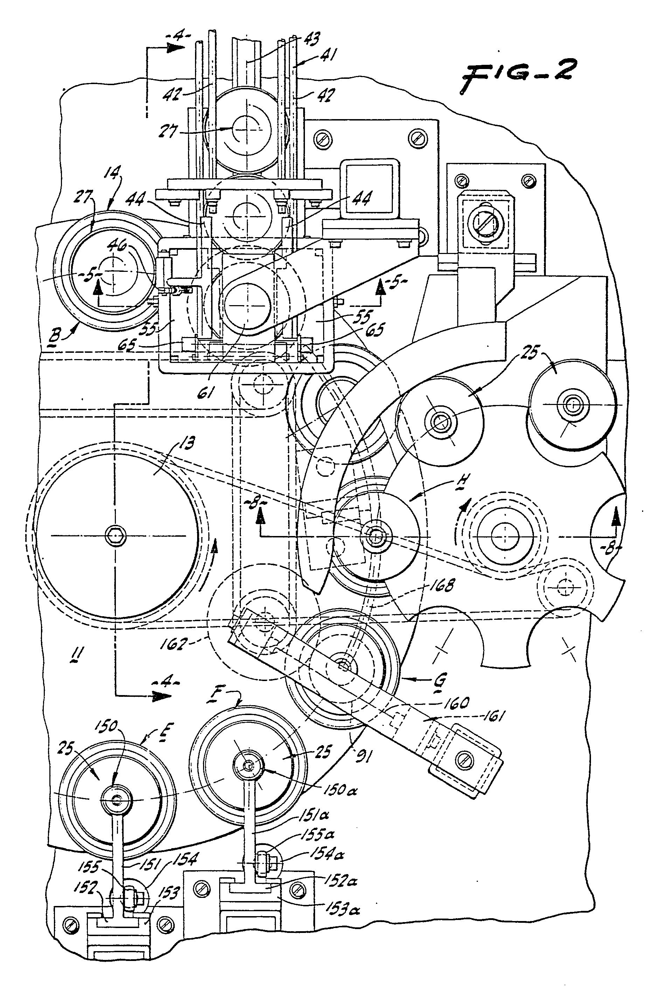

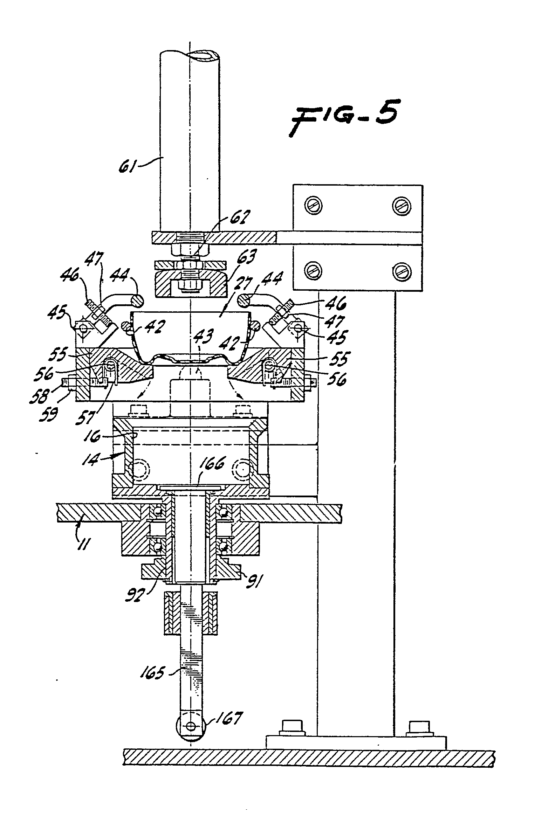

Referring now to Figures 2, 4 and 5, base cups 27 are moved by gravity and are guided to station A by guide cage 41 including rods 42 and a guide bar 43. Rods 44, one on each side of the cup (Figure 5) are pivoted at 45 on a frame bracket and their positions are adjustable by means of screws 46 threaded through nuts 47. These rods can be pivoted out of the way for access, for example, to remove a damaged base cup. The base cup 27 is seated on pivoted supports 55 which are pivotally mounted at 56 and are biased upwardly by springs 57 whose tension can be adjusted by screws 58 which are threaded through nuts 59. An hydraulic cylinder 61 has a rod 62 having at its lower end a contact member 63. At the proper time when a base cup is in position and seated on supports 55 at station A, the rod 63 is extended to force the base cup downwardly against the action of the springs 57, causing the springs to separate and allowing the base cup to enter the respective socket 14 where it assumes the position shown in Figure 10, resting on the upper ledge of the stepped bottom of the socket.

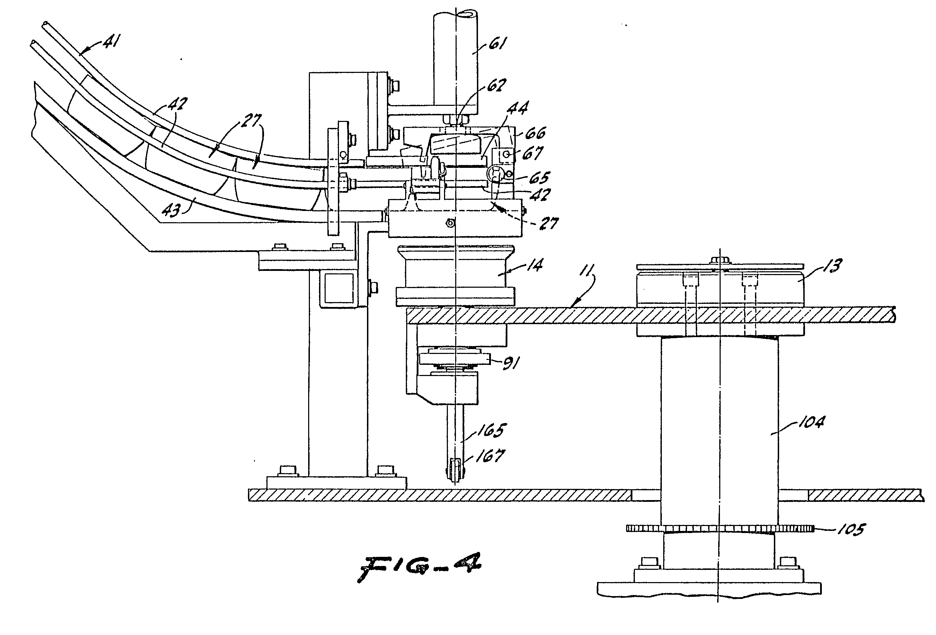

Referring to Figure 4 a cup detector 65 is provided to detect whether a cup is in position for delivery to a socket. Such detector may comprise, for example, a photo-electric device whose beam is interrupted by the presence of a cup, but is not interrupted if a cup is absent. The former condition (cup present, light beam interrupted), by suitable mechanism, allows the cylinder 61 to operate. When the detector senses that a cup is absent the cylinder 61 is inactivated. Also as shown in Figure 10 a keeper member 66 is provided pivoted at 67, having a weighted free end and formed with a notch 68 and with a clearance hole 69. When the member 63 descends to the position shown in Figure 10 it allows the keeper 66 to drop down and causes its notch 68 to engage the next cup in line, thereby holding it back and preventing its further forward movement until the member 63 ascends again, raises the keeper 66 and allows the next cup to drop into place.

At station C (or alternatively at idle station B) a cup detector similar to that at station A is provided to detect again the presence or absence of a cup in a holder 14. If a cup is detected, as by interruption of a light beam, the mechanism hereinafter described for operating the adhesive applicator is caused to operate when the respective cup reaches the station C and the mechanism described hereinafter for depositing a container in a cup is caused to operate when the respective cup reaches station D. If the absence of a cup is detected such mechanisms are inactivated for the respective empty holder when it reaches station C and again when it reaches station D. Suitable control equipment may be mechanical, electro-mechanical or electronic and preferably includes a micro-processor to activate/inactivate at the proper time.

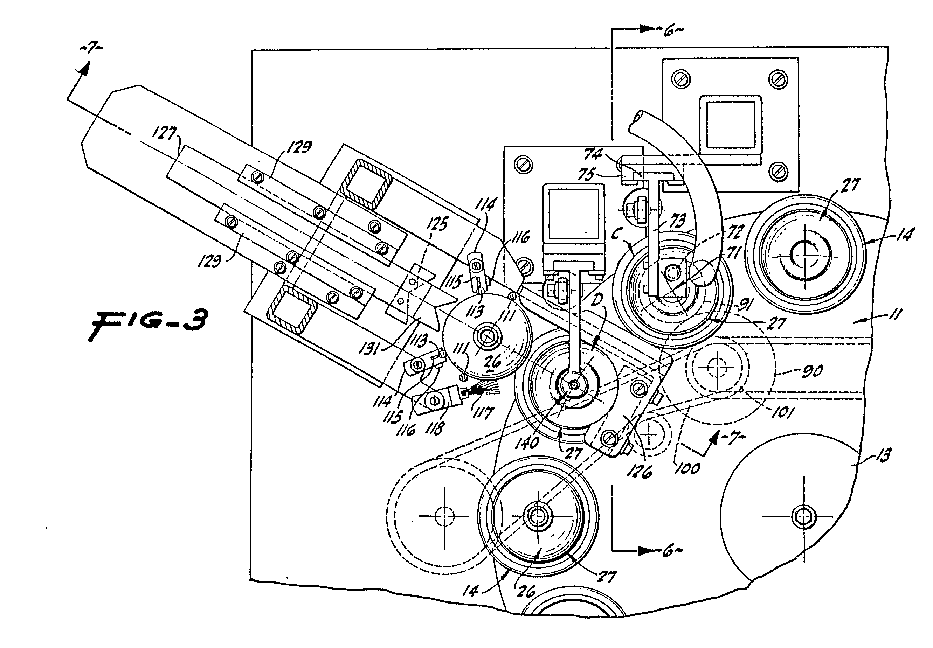

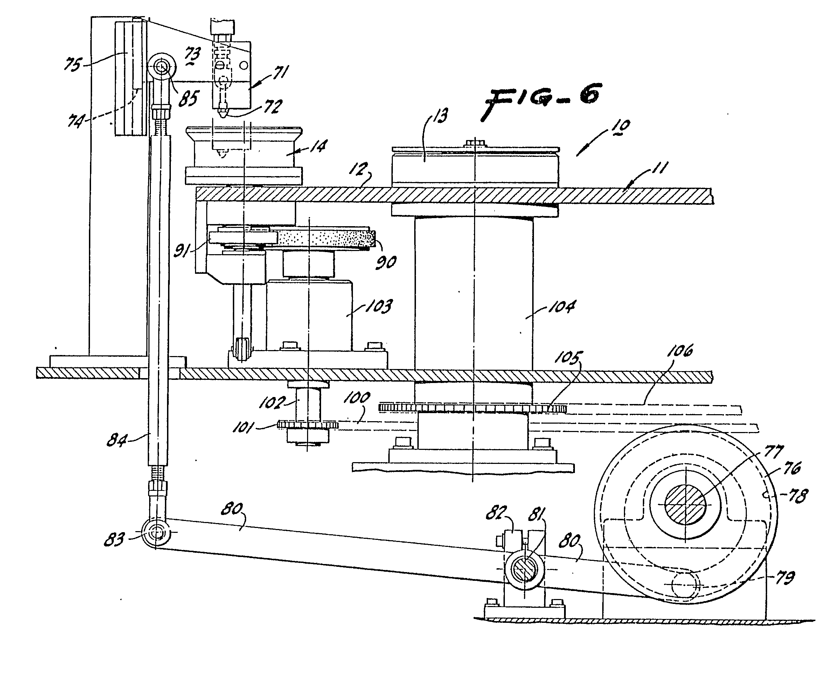

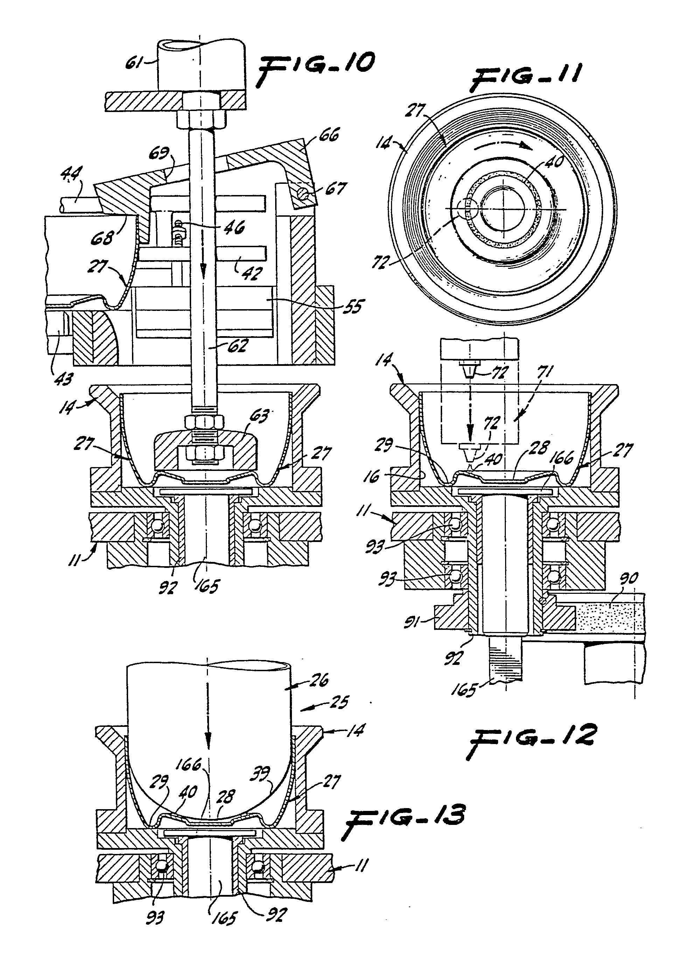

Referring now to Figures 3, 6 and 12, an adhesive applicator 71 is shown having a nozzle 72 carried by a bracket 73 fixed to a slide 74, mounted for sliding movement in gibs 75 on the frame of the machine. The slide, and with it the adhesive applicator, are operated by a cam 76 on a cam shaft 77, such cam having a cam grooving 78 in which a cam follower roller 79 rides. The follower 79 is mounted on one end of a lever 80 which is pivoted at 81 on a bracket 82. The other end of the lever 80 is pivotally connected at 83 to an adjustable vertical rod 84 which is pivotally connected at 85 to the bracket 73. In Figure 12, the adhesive applicator is shown in operating position close to the bottom of a base cup 27. The base cup is caused to spin by a friction wheel 90 bearing against a wheel 91 fixed to a hollow shaft 92 whose upper end is fixed to the socket 14. Bearings 93 allow such rotation. The nozzle applies a line of glue to the bottom of cup 27 shown at 40 in Figure 11. Then the adhesive applicator is withdrawn and the turret indexes another 30° to bring the base cup with its glue line 40 to station D. The wheel 90 is continuously rotated (see Figure 6) by suitable means such as a chain 100, a sprocket 101, a shaft 102, and a gear reduction device 103. Figure 6 also shows the turret drive which includes drive motor (not shown) which through suitable gears and an indexing mechanism of known construction drive shaft 104 and turret 12 intermittently. The motor rotates continuously, the intermittent indexing being caused by the indexing mechanism. A sprocket 105 and chain 106 drive star wheel 21 giving it an intermittent indexing motion.

Referring now to Figures 3, 7 and 9, at station D a container 26 is applied to base cup 27 located in a socket 14 and having a glue line 40 applied to interior. At station D air pressure is also applied to the interior of the container when it is seated in a cup to act as a pressure medium to bring the bottom of the container into firm contact with the glue line 40. This air pressure also acts to smooth the surface of the container and to remove or diminish irregularities in the shape of the container. A vertical container guide 110 is formed by spaced rods 111, two of which continue further down than the others. The other rods terminate at a higher level for clearance purposes. To provide lateral support in this lower region just above a support plate 112 (which provides bottom support for the lowermost container 26), rods 113 are provided which are mounted on brackets 114 which are split at 115 to receive the rods. Screws 116 are provided to clamp the rods 113 in place. A further yielding lateral support is provided by a brush 117 mounted on a bracket 118. As a container is pushed forwardly (to the right as viewed in Figure 3) the brush 117 will yield, allowing the container to move and will spring back into its normal supporting position when the container passes it by. This brush may be made of nylon or other suitable material which will not scratch the surface of the container. When a container has been pushed forwardly it is gripped momentarily between a lower pusher member 125 and a stationary plate 126. Alternatively a pivoted spring loaded and adjustable guide rod may be employed instead of a brush.

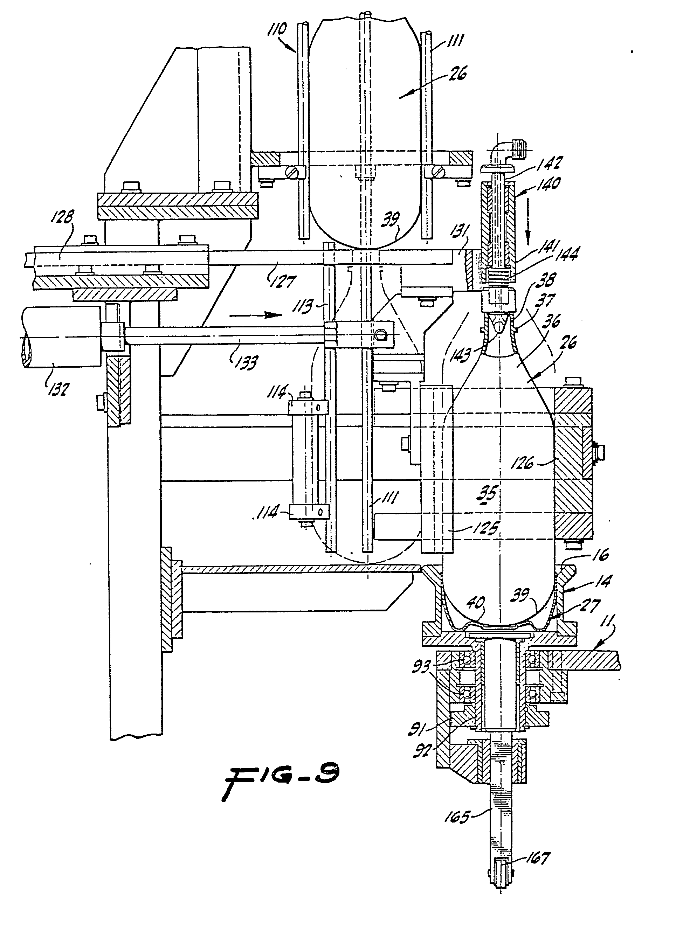

The pushing mechanism comprises a slide 127 slidable in guide 128 and gibs 129. To the forward end (the right hand end as viewed in Figures 7 and 9), of the slide 127 is attached a bracket assembly 130 to which a lower pusher member 125 and an upper pusher member 131 are attached, each having a notched portion to engage the container. The upper pusher 131 contacts the neck of the container and the lower pusher 125 contacts the body of the container as best shown in Figure 9. These pushers are operated in unison by an hydraulic cylinder 132 having a rod 133 which is connected to the bracket assembly 130. As will be seen in Figure 9, the upper pusher extends further forwardly than the lower pusher to take into account the different diameters of the neck and of the body of the container.

When a container has been pushed forwardly to the position shown in broken lines in Figure 9, it is gripped between the lower pusher 125 and a stationary plate 126. At this moment an air pressure applicator 140 is lowered into operating position. The applicator 140 comprises a sleeve 141 through which an air conduit 142 extends to the bottom of which is connected a nozzle 143. When the applicator descends, the nozzle enters the neck of the container and continued downward movement pushes the container downwardly between the pusher 125 and the plate 126 and into the cup 27 where its round bottom 39 seats in the concave bottom of the cup and is brought into firm contact with the glue line 40. The spring 144 which forms a part of the assembly 140 is compressed and an air-tight seal is formed. Air under pressure, for example 5.6 kilo/sq.cm gauge, performs the double function of applying pressure to the glue line and of smoothing out irregularities in the shape of the container.

The container-base cup assembly then passes by increments through three idle stations to station E where air under high pressure is applied. Should a container fail, through suitable and known types of control equipment including a micro-processor memory, the failed container-base assembly is removed and discarded at a convenient point downstream. For example, the pneumatic system employed to pressure the container may include a pressure sensitive switch which upon a sudden drop of pressure due to failure, activates the control equipment. The mechanism for applying air pressure is similar to that shown in Figure 6 and described hereinabove with reference to station D. Thus, referring to Figure 2, a tube, nozzle and air tube assembly 150 is provided which is carried by a bracket 151 fixed to a slide 152, slidable in a channel 153. An hydraulic cylinder 154 is connected at 155 to the bracket 151. The sequence of operation — lowering of the nozzle into the neck of a container, application of air pressure sufficient to accomplish testing and withdrawal of the nozzle — will be apparent from the description of similar apparatus at station D.

The container-cup assembly is then moved to station F where similar apparatus (reference numbers being the same but with the letter "a" added) applies pressure to test for leaks. Leakage is detected by suitable means, e.g., a pressure operated switch, and by means of suitable control equipment a leaky container-base cup assembly is removed downstream.

Still referring to Figure 2, the container-cup assembly is next moved to station G where it is sighted by a beam 140 generated by a photoelectric device 161, such beam being aimed so that it just misses the neck of the container if it is erect and properly seated in the base cup. The container-cup assembly is caused to spin by a friction wheel 162 which engages the wheel 191 on hollow shaft 92. If the container is not properly seated and leans beyond an allowable limit from the perpendicular, during its rotation it will obstruct the beam 160 which constitutes a signal which, by means of suitable control equipment, causes the container-base cup assembly to be removed downstream.

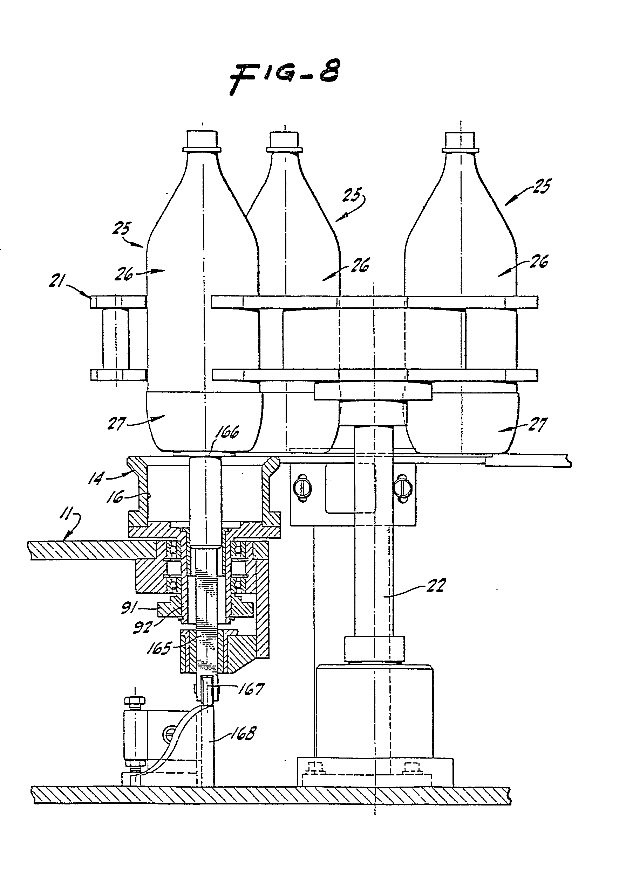

The container-cup assembly is then moved to station H. Referring to Figure 8 and to Figure 12, a rod 165 extends through hollow shaft 92 and has a disc 166 at its upper end and a roller 167 at its lower end. During the movement from station A through station G, the roller 167 is out of contact with any other mechanism and is idle, but at station H it contacts a cam 168 mounted on the frame of the machine. This cam has a profile such that it lifts the roller 167, the rod 165, and the disc 166 and with them the container-cup assembly to the elevated position shown in Figure 8, where it is picked up by a pocket 23 of the star wheel 21 and is guided by curved guide 20 and the star wheel to outlet guide 24.

The various steps in operation of the apparatus will be synchronized by suitable equipment such as cams and other mechanical devices, electromechanical devices and electronic equipment. The adhesive may be a hot melt glue or a cold setting adhesive.

**Claims**

1. Apparatus for supplying cups to the bottoms of round bottomed containers and comprising a transport device (11) for intermittently moving a cup holder (14) along a path, a cup feed device (41) for depositing a cup (27) into a cup holder (14) and means (114, 140) for depositing a round bottomed container (26) into a cup (27) supported in said cup holder (14) and pressing the container against the cup for adhesive securement thereof using adhesive applied to an inner surface of the cup (14), and means (H) for discharging the cup and container assembly from said transport device, characterised in that the cup feed device (41) is provided at a station (A) upstream of the station (D) at which there are located the means for depositing the container into the cup; adhesive applying means (71) are provided at a station (C) intermediate the stations (A and D) at which the cup feed device and the container supply means are located and in that the means (140) for applying pressure to the container are located at the same station as the container supplying means (114); the cup feed device (41), the container supplying means (114), the adhesive applying means (71) and the pressure applying means (140) being located at respective stations for operation during dwell periods in the intermittent indexing operation of said transport device.

2. Apparatus as claimed in claim 1, characterised in that the transport device comprises an indexing, intermittently operating turret (11) for indexing movement of each of a plurality of said holders (14) carried thereby thereby from the cup supplying station (A) to the container applying station (D) and back to the cup receiving station, the cup feed device (41, 55, 57, 61, 63) being adapted automatically to supply a cup to each holder when the holder is at rest in the station (A).

3. Apparatus as claimed in claim 1 or 2, characterised in that said pressure applying means comprises an air pressure device (140) adapted (at 143) to apply air pressure to the interior of the container (26).

4. Apparatus as claimed in Claim 1, 2, or 3, characterised in that a cup sensing device (65) is provided to automatically sense the presence or absence of a cup (27) in a holder (14) before adhesive (40) is deposited in the cup.

5. Apparatus as claimed in any preceding claim, characterised by at least one testing station (E or F) downstream from the container applying station (D) including means for automatically testing the soundness of the container-cup assembly.

6. Apparatus as claimed in any preceding claim, characterised by the provision of an alignment testing station (G) having a device (161) for testing that the containers are erect within the cups to which they have been applied.

7. Apparatus as claimed in claim 6, wherein the alignment testing device comprises a photo-electric device (161) and has a drive (162) for so spinning the cup-container assembly that a beam (160) is intercepted if the container is out of alignment.

8. Apparatus as claimed in any preceding claim, characterised in that the adhesive applying means comprises an adhesive applicator (72) mounted for movement into and out of the interior of the cup (27) in a cup holder (14) and a drive means (90, 91) for spinning the cup while the adhesive applicator (72) is within the cup to cause application of a curved glue line to the bottom of the cup.

9. A method of applying round bottomed containers to cups (27) with the round bottoms of the containers seated in the cups, wherein the containers are pressed into cups to the interior of which adhesive has been deposited while the cups are held by cup holders (14) in a transport device (11) for advancing the cups, characterised in that the cups (27) are first deposited in sequence in cup holders (14) prior to having adhesive deposited therein, and in that the containers are fed to the cups and pressed thereinto while each individual cup is temporarily stationary prior to removal of the cup and the container assemblies from the respective cup holder.

10. A method as claimed in Claim 9, characterised in that the cup (27) is caused to spin while adhesive is being applied thereto to cause a continuous curved line of adhesive to be applied to the bottom of the cup.

11. A method as claimed in Claim 9 or 10, characterised in that air pressure is applied to the container to force it into the cup to provide a secure adhesive seal.

**Patentansprüche**

1. Vorrichtung zum Anbringen von Füßen an den Böden von Behältern mit rundgeformten Böden, umfassend eine Transporteinrichtung (11) zur intermittierenden Bewegung eines Fußhalters (14) längs einer Bahn, eine Fußzuführungseinrichtung (41) zum Einsetzen eines Fußes (27) in einen Fußhalter (14) und eine Einrichtung (114, 140) zum Einsetzen eines Behälters (26) mit rundgeformtem Boden in einen in dem Fußhalter (14) gehalterten Fuß (27) und zum Andrücken des Behälters gegen den Fuß zur Klebebefestigung daran unter Verwendung von Klebstoff, der auf eine Innenoberfläche des Fußes (14) aufgebracht ist, und eine Einrichtung (H) zum Austragen der Fuß — und Behälter-Anordnung aus der Transporteinrichtung, dadurch gekennzeichnet, daß die Fußzuführungseinrichtung (41) in einer Station (A) stromaufwärts von der Station (D) vorgesehen ist, in der sich die Einrichtung zum Einsetzen des Behälters in den Fuß befindet; daß eine Klebstoffauftragseinrichtung (71) in einer Station (C) zwischen den Stationen (A und D) vorgesehen ist, in der sich die Fußzuführungseinrichtung und die Behälterlieferungseinrichtung befinden, und daß die Einrichtung (140) zur Druckbeaufschlagung des Behälters sich in derselben Station wie die Behälterlieferungseinrichtung (114) befindet; wobei die Fußzuführungseinrichtung (41), die Behälterlieferungseinrichtung (114), die Klebstoffauftragseinrichtung (71) und die Druckbeaufschlagungseinrichtung (140) sich in entsprechenden Stationen befinden und zum Betrieb während der Stillstandsperioden beim intermittierenden Weiterschaltbetrieb der Transporteinrichtung ausgelegt sind.

2. Vorrichtung nach Anspruch 1, dadurch gekennzeichnet, daß die Transporteinrichtung einen weiterschaltenden, intermittierend arbeitenden Turm (11) für die Weiterschaltbewegung des jeweiligen Fußhalters aus einer Vielzahl von davon getragenen Fußhaltern (14) von der Fußlieferungsstation (A) zu der Behälteranbringungsstation (D) und zurück zur Fußempfangsstation aufweist, wobei die Fußzuführungseinrichtung (41, 55, 57, 61, 63) so ausgelegt ist, daß sie automatisch einen Fuß dem jeweiligen Halter zuführt, wenn der Halter sich in der Station (A) in Ruhe befindet.

3. Vorrichtung nach Anspruch 1 oder 2, dadurch gekennzeichnet, daß die Druckbeaufschlagungseinrichtung eine Drucklufteinrichtung (140) aufweist, die (bei 143) so ausgelegt ist, daß sie das Innere des Behälters (26) mit Druckluft beaufschlagt.

4. Vorrichtung nach Anspruch 1, 2 oder 3, dadurch gekennzeichnet, daß eine Fußabtasteinrichtung (65) vorgesehen ist, um automatisch die Anwesenheit oder Abwesenheit eines Fußes (27) in einem Halter (14) abzutasten, bevor Klebstoff (40) in dem Fuß aufgebracht wird.

5. Vorrichtung nach einem der vorhergehenden Ansprüche, gekennzeichnet durch zumindest eine Prüfstation (E oder F) stromabwärts von der Behälteranbringungsstation (D), die eine Einrichtung aufweist, um automatisch die Fehlerlosigkeit der Behälter-Fuß-Anordnung zu prüfen.

6. Vorrichtung nach einem der vorhergehenden Ansprüche, gekennzeichnet durch das Vorsehen einer Ausrichtungsprüfstation (G) mit einer Einrichtung (161) zum Prüfen, ob die Behälter aufrecht in den Füßen sitzen, an denen sie angebracht worden sind.

7. Vorrichtung nach Anspruch 6, dadurch gekennzeichnet, daß die Ausrichtungsprüfeinrichtung eine fotoelektrische Einrichtung (161) aufweist und einen Antrieb (162) besitzt, um die Fuß-Behälter-Anordnung derart in schnelle Rotation zu versetzen, daß ein Strahl (160) unterbrochen wird, wenn der Behälter eine Fehlausrichtung besitzt.

8. Vorrichtung nach einem der vorhergehenden Ansprüche, dadurch gekennzeichnet, daß die Klebstoffauftragseinrichtung einen Klebstoffapplikator (72), der für eine Bewegung in das Innere und aus dem Inneren des Fußes (27) in einem Fußhalter (14) montiert ist, und eine Antriebseinrichtung (90, 91) aufweist, um den Fuß in schnelle Drehbewegung zu versetzen, während sich der Klebstoffapplikator (72) innerhalb des Fußes befindet, um für das Aufbringen einer gekrümmten Klebstofflinie am Boden des Fußes zu sorgen.

9. Verfahren zum Anbringen von Behältern mit rundgeformtem Boden an Füßen (27), wobei die rundgeformten Böden der Behälter in den Füßen sitzen, wobei die Behälter in die Füße hineingedrückt werden, auf deren Innenseite Klebstoff aufgebracht worden ist, während die Füße von Fußhaltern (14) in einer Transporteinrichtung (11) zum Vorschub der Füße gehalten werden, dadurch gekennzeichnet, daß die Füße (27) zuerst der Reihe nach in Fußhalter (14) eingesetzt werden, bevor in ihnen Klebstoff aufgebracht wird, und daß die Behälter den Füßen zugeführt und in diese hineingedrückt werden, während jeder einzelne Fuß zeitweilig stationär ist, bevor das Herausnehmen der Fuß- und Behälter-Anordnungen aus den jeweiligen Fußhaltern erfolgt.

10. Verfahren nach Anspruch 9, dadurch gekennzeichnet, daß der Fuß (27) in eine schnelle Drehbewegung versetzt wird, während Klebstoff darauf aufgebracht wird, um die Ausbildung einer kontinuierlichen gekrümmten Linie von Klebstoff am Boden des Fußes hervorzurufen.

11. Verfahren nach Anspruch 9 oder 10, dadurch gekennzeichnet, daß der Behälter mit Druckluft beaufschlagt wird, um ihn in den Fuß hineinzudrücken, um eine sichere Klebverbindung auszubilden.

**Revendications**

1. Appareil pour appliquer une coupe au fond d'un récipient à fond arrondi et comprenant un dispositif de transport (11) pour déplacer de façon intermittente un support de coupe (14) le long d'un trajet, un dispositif d'alimentation de coupes (41) pour déposer une coupe (27) dans un support de coupe (14) et des moyens (114, 140) pour déposer un récipient à fond arrondi (26) dans une coupe (27) supportée dans ledit support de coupe (14) et presser le récipient contre la coupe pour sa fixation par adhésion en utilisant un adhésif appliqué à une surface intérieure de la coupe (14), et des moyens (H) pour décharger l'assemblage de la coupe et du récipient dudit dispositif de transport, caractérisé par le fait que le dispositif d'alimentation de coupes (41) est prévu à un poste (A) en amont du poste (D) auquel sont situés les moyens pour déposer le récipient dans la coupe; que des moyens d'application d'adhésif (71) sont prévus à un poste (C) intermédiaire entre les postes (A et D) auxquels sont situés le dispositif d'alimentation de coupes et les moyens de fourniture de récipients, et en ce que les moyens (140) pour appliquer la pression au récipient sont situés au même poste que les moyens de fourniture de récipients (114); le dispositif d'alimentation de coupes (41), les moyens de fourniture de récipients (114), les moyens d'application d'adhésive (71) et les moyens d'application de pression (140) étant situés à des postes respectifs pour fonctionner pendant les périodes de repos dans le fonctionnement d'indexation intermittent dudit dispositif de transport.

2. Appareil selon la revendication 1, caractérisé par le fait que le dispositif de transport comprend un touret d'indexation (11) fonctionnant de façon intermittente pour un mouvement d'indexation de chacun d'une pluralité desdits supports de coupe (14) qu'il porte depuis le poste d'alimentation de coupes (A) au poste d'application du récipient (D) et de nouveau au poste de réception de coupe, le dispositif d'alimentation de coupes (41, 55, 57, 61, 63) étant automatiquement adapté pour fournir une coupe à chaque support lorsque le support est au repos au poste (A).

3. Appareil selon la revendication 1 ou 2, caractérisé par le fait que lesdits moyens d'application de pression comprennent un dispositif de pression d'air (140) agencé (à 143) pour appliquer une pression d'air à l'intérieur du récipient (26).

4. Appareil selon la revendication 1, 2 ou 3, caractérisé par le fait qu'un dispositif de détection de coupe (65) est prévu pour détecter automatiquement la présence ou l'absence d'une coupe (27) dans le support (14) avant que l'adhésif (40) soit déposé dans la coupe.

5. Appareil selon l'une revendications précédentes, caractérisé par au moins un poste d'essai (E ou F) en aval du poste d'application de récipient (D) comprenant des moyens pour essayer automatiquement la qualité de l'ensemble récipient-coupe.

6. Appareil selon l'une des revendications précédentes, caractérisé par un poste d'essai d'alignement (G) possédant un dispositif (161) pour vérifier que les récipients sont droits dans les coupes auxquels ils ont été appliqués.

7. Appareil selon la revendication 6, caractérisé par le fait que le dispositif d'essai d'alignement comprend un dispositif photoélectrique (161) et possède un entraînement (162) pour faire tourner l'ensemble coupe-récipient de sorte qu'un rayon (160) est intercepté si le récipient n'est pas aligné.

8. Appareil selon l'une quelconque des revendications précédentes, caractérisé par le fait que les moyens d'application d'adhésif comprennent un applicateur d'adhésif (72) monté pour se déplacer dans et hors de l'intérieur de la coupe (27) dans le support de coupe (14) et des moyens d'entraînement (90, 91) pour faire tourner la coupe tandis que l'applicateur d'adhésif (72) est dans la coupe pour provoquer l'application d'une ligne de colle courbe au fond de la coupe.

9. Procédé pour appliquer des récipients à fond arrondi à des coupes (27) avec les fonds arrondis des récipients posés dans les coupes dans lequel les récipients sont pressés dans les coupes à l'intérieur desquelles de l'adhésif a été déposé tandis que les coupes sont maintenues par des supports de coupe (14) dans un dispositif de transport (11) pour faire avancer les coupes, caractérisé par le fait que les coupes (27) sont d'abord déposées en séquence dans les supports de coupe (14) avant de recevoir l'adhésif et en ce que les récipients sont amenés aux coupes et pressés à leur intérieur tandis que chaque coupe individuelle est temporairement stationnaire avant l'enlèvement des ensembles constitués par la coupe et le récipient des supports de coupe respectifs.

10. Procédé selon la revendication 9, caractérisé par le fait que la coupe (27) est amenée à tourner tandis que de l'adhésif lui est appliqué pour appliquer une ligne courbe continue d'adhésif au fond de la coupe.

11. Procédé selon l'une des revendications 9 et 10, caractérisé par le fait qu'une pression d'air est appliquée au récipient pour le forcer dans la coupe pour fournir un joint adhésif fiable.

DETECT CUP
B

INJECT ADHESIVE
C

INSERT CUP
A

40

27

14

FIG-1

INSERT BOTTLE
AIR PRESSURE
D

15

20

24

25

14

16

25

14

25

27

13

12

14

11

23

10

25

22

23

21

H

25

25

14

PERPENDICULAR TEST
G

LEAK TEST
F

E

HIGH PRESSURE TEST

0 027 379

FIG-2

FIG-3

FIG-4

FIG-5

FIG-6

FIG-7

FIG-8

FIG-9

FIG-10

FIG-11

FIG-12

FIG-13

0 027 379

10